# EUROPÄISCHE PATENTSCHRIFT

(11) **EP 2 984 013 B1**
(45) Veröffentlichungstag und Bekanntmachung des Hinweises auf die Patenterteilung: **29.03.2017**
(21) Anmeldenummer: 14723339.9
(22) Anmeldetag: 11.04.2014
(51) Int. Cl.: B65G 53/46, B65G 65/48

(54) **VORRICHTUNG UND VERFAHREN ZUR DOSIERUNG VON SCHÜTTGUTPARTIKELN**
APPARATUS AND METHOD FOR DOSING BULK MATERIAL PARTICLES
APPAREIL ET PROCÉDÉ POUR LE DOSAGE DE PARTICULES DE MATIÈRES EN VRAC

(30) Priorität: 11.04.2013 DE 102013206482
(43) Veröffentlichungstag der Anmeldung: 17.02.2016
(73) Patentinhaber: Alfons Tschritter GmbH, 97904 Dorfprozelten (DE)
(72) Erfinder: TSCHRITTER, Thorsten, 97909 Stadtprozelten (DE); SNISCHEK, Timo, 97909 Stadtprozelten (DE)
(74) Vertreter: Maikowski & Ninnemann Patentanwälte Partnerschaft mbB
(86) Internationale Anmeldenummer: PCT/EP2014/057417
(87) Internationale Veröffentlichungsnummer: WO 2014/167110

(56) Entgegenhaltungen:
- EP-A2- 0 225 775
- EP-B1- 0 178 005
- EP-B1- 1 654 174
- US-A- 4 516 674

## Beschreibung

Die Erfindung betrifft eine Dosiervorrichtung für Schüttgutpartikel mit den Merkmalen des Anspruchs 1 und ein Verfahren zur Dosierung von Schüttgutpartikeln mit den Merkmalen des Anspruchs 14.

In vielen Anwendungen ist es notwendig, Schüttgüter aus einem Materialvorrat zu dosieren. Eine Möglichkeit, diese Dosierung vorzunehmen, ist beispielsweise aus der gattungsgemässen EP 1 495 230 B1 bekannt. Diese Vorrichtung weist ein Gehäuse mit einem Materialeinlass und einem Materialauslass sowie einer Aufnahme für einen Rotor auf. Zwischen der Mantelfläche des Rotors und der Innenfläche des Gehäuses besteht ein Kanal, in dem Schüttgüter durch eine Drehung des Rotors vom Materialeinlass zum Materialauslass befördert werden kann.

Nachteile derartiger Dosiervorrichtungen sind einerseits eine ungleichmäßige Dosierung des Schüttguts, sowie andererseits, dass darin ein oder mehr elastische Dichtmittel, welche in Kontakt mit dem Rotor stehen, notwendig sind. Diese Dichtmittel unterliegen einem Verschleiß, wobei einerseits das Schüttgut durch Abrieb des Dichtmittels verunreinigt werden kann und andererseits die Dichteigenschaft des Dichtmittels beeinträchtigt wird, sowie die Dosiervorrichtungen mit zunehmendem Verschleiß eine abnehmende Dosiergenauigkeit aufweisen kann. Des Weiteren ist es ein Nachteil der beschriebenen Dosiervorrichtungen, dass Schüttgut nur unzureichend gleichmäßig dosiert werden kann.

Ein weiterer Nachteil der vorgenannten Dosiervorrichtungen ist, dass, z.B. zu Zwecken der Wartung, der Rotor erst dann entfernt werden kann, wenn zuvor das bzw. die Dichtmittel entfernt wurden, was eine Wartung deutlich erschwert.

Zur Dosierung von Schüttgütern sind weiterhin Förderschnecken bekannt, welche zwar eine ausreichend gleichmäßige Dosierung erlauben, jedoch nur in einem engen Drehzahlbereich verwendet werden können. Zudem steht bei Förderschnecken die Förderrate des zu dosierenden Schüttguts nicht in einer linearen Beziehung zu der Drehzahl der Förderschnecke, was die Handhabung erschwert und den Einsatzbereich eingrenzt.

Der Erfindung liegt daher das Problem zugrunde, eine Dosierwalze und ein Dosierverfahren zu schaffen, die eine gleichmäßige Dosierung des Schüttguts erlauben, ohne dass dabei elastische Dichtmittel, die in Kontakt mit dem Rotor/einer Dosierwalze stehen, notwendig sind.

Dieses Problem wird mit einer Dosiervorrichtung mit den Merkmalen des Anspruchs 1 gelöst.

Eine solche Dosiervorrichtung ist ausgestattet mit einer die Schüttgutpartikel dosierenden Dosierwalze, die einen oberen Totpunkt und einen unteren Totpunkt aufweist, welche durch den oberen bzw. den unteren Schnittpunkt einer senkrechten Achse durch die Drehachse einer Drehrichtung der Dosierwalze mit einer Mantelfläche der Dosierwalze definiert werden.

Es ist vorgesehen, dass die Zufuhr der Schüttgutpartikel durch eine Öffnung einer Schüttgutzufuhr in Drehrichtung der Dosierwalze nach dem oberen Totpunkt erfolgt und die Abfuhr der Schüttgutpartikel durch eine Öffnung einer Schüttgutabfuhr in Drehrichtung der Dosierwalze nach dem unteren Totpunkt erfolgt.

Durch eine derartige Anordnung wird erreicht, dass die Schüttgutpartikel gleichmäßig und schonend durch eine Drehung der Dosierwalze in der Drehrichtung von der Schüttgutzufuhr zur Schüttgutabfuhr befördert werden können. Durch Aktivieren und/oder die Geschwindigkeit der Drehung wird das Schüttgut dosiert. Die Förderrate kann dabei in linearer Beziehung zur Drehgeschwindigkeit der Dosierwalze stehen. Eine Ausführungsform der Dosiervorrichtung kann mit Drehgeschwindigkeiten über einen Verstellbereich von 1:1000 betrieben werden, wodurch die Dosiervorrichtung besonders vielseitig und flexibel einsetzbar ist.

Als Schüttgut wird hierbei jedwedes Gemenge bezeichnet, welches in einer schüttfähigen Form vorliegt. Das Schüttgut kann beispielsweise Kunststoffgranulat, Kalk, Holzpartikel, Düngemittel, Futtermittel, Tabletten, Lebensmittel wie z.B. Getreide, Baustoffe, Rohstoffe oder jedes andere Schüttgut sein oder eine beliebige Mischung aus verschiedenen Schüttgütern. Die Partikelgröße (d.h. Korngröße oder Stückgröße) des Schüttguts kann hierbei je nach Schüttgut unterschiedlich sein und insbesondere kann ein Gemenge auch aus Partikeln mit unterschiedlicher Größe zusammengesetzt sein. Mit Vorteil werden Schüttgutpartikel mit mittleren Durchmessern zwischen 0,5 und 2 mm gefördert, die auch länglich sein können, mit mittleren Längen zwischen 1 und 3 mm. Allerdings können auch Schüttgüter mit deutlich davon abweichenden Partikelgrößen dosiert/gefördert werden, wie beispielsweise Schüttgut in Pulverform oder in deutlich größeren Abmessungen. Insbesondere vorteilhaft ist die Dosiervorrichtung für Schüttgutpartikel, die in einem Spritzgussverfahren eingesetzt werden.

Die Zufuhr/Abfuhr der Schüttgutpartikel wird durch die entsprechenden Öffnungen definiert, durch welche hindurch die Schüttgutpartikel auf die Dosierwalze treffen bzw. sich von der Dosierwalze entfernen. Das bedeutet auch, dass sich übrige Teile der Schüttgutzufuhr und der Schüttgutabfuhr vor die entsprechenden Totpunkte erstrecken können.

Nach einem Totpunkt erfolgt eine Zufuhr/Abfuhr, wenn sich die Öffnung der Zufuhr/Abfuhr nicht über den Totpunkt hinaus erstreckt und der Abstand der Öffnung zum Totpunkt in Drehrichtung gesehen länger ist als entgegen der Drehrichtung gesehen.

Die genaue Anordnung der Schüttgutzufuhr und der Schüttgutabfuhr (einschließlich der entsprechenden Öffnungen) ist hierbei nicht näher festgelegt. Vorzugsweise befindet sich die Zufuhr allerdings in einer Position kurz vor 12 Uhr sofern die Drehrichtung der Dosierwalze gegen den Uhrzeigersinn gerichtet ist.

Mit Vorteil wird die Schüttgutzufuhr von einer in Drehrichtung vorderen Innenfläche und einer in Drehrichtung hinteren Innenfläche begrenzt, wobei die vordere Innenfläche eine senkrechte Kante aufweist, welche im Wesentlichen senkrecht auf die Mantelfläche der Dosierwalze stößt. Durch eine derart geformte Kante kann die Dosierung der Schüttgutpartikel gleichmäßig erfolgen, ein Verklemmen von Schüttgutpartikeln zwischen der Dosierwalze und einer der Dosierwalze zugewandten Innenfläche eines Gehäuses der Dosiervorrichtung sowie eine damit verbundene Zerstörung von Schüttgutpartikeln wird vermindert. Durch die senkrechte Kante können Schüttgutpartikel entgegen der Drehrichtung der Dosierwalze verschoben werden.

Die senkrechte Kante kann entweder ein integraler Teil der vorderen Innenfläche sein oder daran festgelegt werden. Des Weiteren kann die Kante aus dem gleichen Material wie das der vorderen Innenfläche gebildet sein oder aus einem anderen Material bestehen.

Bei Ausführungsformen der Dosiervorrichtung ist es möglich, dass auf elastische Dichtungselemente, welche am Gehäuse befestigt werden und die in Kontakt mit der Dosierwalze stehen, verzichtet werden kann. Dies ist von Vorteil, da derartige elastische Dichtungselemente bzw. Abstreifer durch einen solchen Kontakt einem Verschleiß unterliegen, durch den die Funktion dieser Elemente beeinträchtigt werden kann. Darüber hinaus kann ein mit dem Verschleiß einhergehender Abrieb des elastischen Materials das Schüttgut verunreinigen. Dies ist insbesondere der Fall, wenn es sich bei dem Schüttgut um medizinische Produkte handelt oder andere Produkte, die bereits durch geringe Verunreinigungen beeinträchtigt werden können. Darüber hinaus kann, beispielsweise zur Wartung, die Dosierwalze einfach aus dem Gehäuse entnommen werden, ohne, dass zuvor elastische Dichtmittel und/oder Abstreifer entfernt werden müssen.

Je nach Beschaffenheit des Schüttguts, insbesondere für Schüttgüter in Pulverform, kann gegebenenfalls an der senkrechten Kante dennoch zusätzlich ein Dichtungselement bzw. ein Abstreifer (z.B. aus einem elastischen Material wie Gummi) angeordnet sein, welches verhindert, dass Schüttgutpartikel an ungewünschte Stellen in der Dosiervorrichtung gelangen, wie beispielsweise zwischen die Mantelfläche der Dosierwalze und die Innenfläche des Gehäuses abseits eines Schüttgutkanals. Auch kann die Kante selbst die Funktion dieses Dichtungselements ausüben und hierfür beispielsweise aus einem elastischen Material bestehen.

Gemäß einer Ausgestaltung stößt die vordere Innenfläche der Schüttgutzufuhr in einem Winkel, der flacher als senkrecht ist, auf die Dosierwalze. Auch diese Gestaltung dient der gleichmäßigen Dosierung der Schüttgutpartikel. Gleichermaßen kann die in Drehrichtung vordere Innenfläche der Schüttgutzufuhr allerdings auch senkrecht auf die Dosierwalze stoßen.

Mit Vorteil sind das Gehäuse und/oder die Dosierwalze zumindest teilweise aus Edelstahl, insbesondere rostfreiem Edelstahl, hergestellt. Insbesondere ist es von Vorteil, wenn zumindest die Mantelfläche der Dosierwalze und/oder eine Innenfläche des Gehäuses aus einem solchen Material beschaffen sind. Allerdings ist für alle Teile der Dosiervorrichtung auch denkbar, dass sie aus anderen Materialien, wie beispielsweise einfachem Stahl, einem anderen Metall oder einer anderen Legierung oder Kunststoff, hergestellt sind. Die Dosierwalze und/oder das Gehäuse können einstückig hergestellt werden. Sind die Dosierwalze und das Gehäuse aus einem festen Material wie insbesondere Edelstahl gefertigt, kann bei einer Ausführungsform der Dosiervorrichtung, je nach Beschaffenheit des Schüttguts, die Nachgiebigkeit des Schüttguts selbst ausgenutzt werden um ein Verklemmen von Schüttgutpartikeln zu verhindern.

Ferner ist es vorteilhaft, wenn zwischen der Mantelfläche der Dosierwalze und einer Innenfläche des Gehäuses ein Spalt besteht. Durch die Lagerung der Dosierwalze mit einem solchen Spalt können Schüttgutpartikel mit gleicher sowie mit unterschiedlicher Größe gleichmäßig und schonend befördert und dosiert werden ohne in der Dosiervorrichtung zu verklemmen. Es ist besonders vorteilhaft, wenn der Spalt entlang des Umfangs der Dosierwalze eine im Wesentlichen gleichmäßige Breite aufweist. Ebenfalls besonders vorteilhaft ist, wenn die Dosierwalze einen im Wesentlichen zylinderförmigen Querschnitt aufweist und im Gehäuse in einer im Wesentlichen zylinderförmigen Ausnehmung angeordnet ist. In diesem Fall ist der Spalt zwischen der Mantelfläche der Dosierwalze und der Innenfläche des Gehäuses gleichmäßig, wenn die Dosierwalze konzentrisch im Gehäuse gelagert ist. Die Breite des Spalts beträgt mit Vorteil in etwa 10 % der durchschnittlichen Schüttgutgröße (Durchmesser oder Länge). Bei einer derartigen Breite können einerseits keine oder nur eine unwesentliche Anzahl von Schüttgutpartikeln zwischen die Mantelfläche der Dosierwalze und die Innenfläche des Gehäuses abseits eines Schüttgutkanals rutschen und gleichzeitig kommt es nicht oder nur unwesentlich zu einem Verklemmen von Schüttgutpartikeln.

Durch einen Spalt zwischen der Mantelfläche der Dosierwalze und der Innenfläche des Gehäuses besteht zwischen der Mantelfläche der Dosierwalze und der Innenfläche des Gehäuses keine mechanische Berührung. Hierdurch kann ein Verschleiß der Bauteile erheblich reduziert werden.

Die Schüttgutabfuhr kann sich parallel zur senkrechten Achse erstrecken, entsprechend der senkrechten Fallrichtung der Schüttgutpartikel an der Schüttgutabfuhr. Denkbar sind aber auch andere Ausgestaltungen, beispielsweise kann die Schüttgutabfuhr schräg verlaufen um die Schüttgutpartikel an einen bestimmten Ort zu leiten. Zur Abfuhr der Schüttgutpartikel kann es vorteilhaft sein, wenn die Innenfläche des Gehäuses eine zylindrische Form aufweist und die in Drehrichtung vordere Innenfläche der Schüttgutabfuhr im Wesentlichen tangential auf die Innenfläche des Gehäuses stößt.

Mit besonderem Vorteil umfasst die Dosierwalze zur Beförderung der Schüttgutpartikel einen Schüttgutkanal. Ein solcher Schüttgutkanal dient der Aufnahme und dem Transport von Schüttgutpartikeln.

Gemäß einer vorteilhaften Weiterbildung sind im Schüttgutkanal Schüttguttaschen zur Aufnahme und Beförderung der Schüttgutpartikel vorgesehen. Vorzugsweise sind diese Schüttguttaschen muldenförmig mit einer runden/ovalen/elliptischen Öffnung ausgebildet, allerdings sind auch davon abweichende Formen denkbar. Auch die Schüttguttaschen dienen der Aufnahme und dem Transport der Schüttgutpartikel. Schüttgutpartikel können an der Schüttgutzufuhr in die Schüttguttaschen einfallen und durch diese in Drehbewegung mitgenommen werden. Schüttgutpartikel, die von einer solchen Schüttguttasche aufgenommen sind, jedoch größer sind als die Schüttguttasche, können umliegende andere Schüttgutpartikel in die Drehbewegung mitnehmen.

Je nach Beschaffenheit des Schüttguts kann es vorteilhaft sein, wenn an der Schüttgutzufuhr und/oder an der Schüttgutabfuhr mindestens ein Mittel vorgesehen ist, welches verhindert, dass Schüttgutpartikel in den Bereich des Schüttgutkanals zwischen der hinteren Innenfläche der Schüttgutzufuhr und einer vorderen Innenfläche der Schüttgutabfuhr gelangen.

Es ist denkbar, dass die Schüttgutzufuhr im Wesentlichen trichterförmig ausgeführt ist. Allerdings sind auch andere Formen denkbar, wie eine gebogene oder schräge Form oder eine gerade Form, d.h. mit parallelen vorderen und hinteren Innenflächen.

In einer weiteren Ausführungsform ist an der Innenfläche des Gehäuses mindestens eine Profilierung, insbesondere eine Vertiefung, insbesondere in Umfangrichtung oder in Spiralform an der Innenfläche des Gehäuses angeordnet. Eine solche Profilierung z.B. in der Form von parallelen Nuten (d.h. in Umfangsrichtung) trägt dazu bei, dass insbesondere längliche Schüttgutpartikel, die in der Praxis häufig vorkommen, ausgerichtet werden, was zu einer gleichmäßigeren Packungsdichte und letztlich zu eine präzisieren Packungsdichte führt. Eine Ausrichtung der Schüttgutpartikel kann aber auch erfolgen, wenn die mindestens eine Profilierung nicht in Umfangsrichtung angeordnet ist, sondern unter einem Winkel zur Drehrichtung, also in der Innenfläche in Form einer Spirale.

Ferner kann in einer Ausführungsform mindestens eine Abstreifvorrichtung, insbesondere eine elektrostatische Abstreifvorrichtung zur Entfernung von Schüttgutpartikeln oder anderem Material von der Dosierwalze vorgesehen sein. Dabei kann die mindestens eine Abstreifvorrichtung so ausgebildet sein, dass sie konturangepasst in den Schüttgutkanal der Dosierwalze ragt.

Das der Erfindung zugrundeliegende Problem wird erfindungsgemäß auch mit einem Verfahren nach Anspruch 14 gelöst.

Danach wird zur Dosierung von Schüttgutpartikeln eine Dosiervorrichtung für Schüttgutpartikel, mit einer die Schüttgutpartikel dosierenden Dosierwalze, die einen oberen Totpunkt und einen unteren Totpunkt aufweist, welche durch den oberen bzw. den unteren Schnittpunkt einer senkrechten Achse durch die Drehachse einer Drehrichtung der Dosierwalze mit einer Mantelfläche der Dosierwalze definiert werden verwendet. Die Schüttgutpartikel werden durch eine Öffnung einer Schüttgutzufuhr in Drehrichtung der Dosierwalze nach dem oberen Totpunkt zugeführt. Durch eine Drehung der Dosierwalze werden die zugeführten Schüttgutpartikel zu einer Schüttgutabfuhr befördert. Durch eine Öffnung der Schüttgutabfuhr werden die Schüttgutpartikel dann in Drehrichtung der Dosierwalze nach dem unteren Totpunkt abgeführt.

Dieses Verfahren ermöglicht eine gleichmäßige Dosierung der Schüttgutpartikel, ohne dass es zu einem Verklemmen der Schüttgutpartikel und/oder einer Zerstörung von Schüttgutpartikeln kommt.

Das Verfahren zur Dosierung von Schüttgutpartikeln kann besonders gleichmäßig und schonend erfolgen, wenn die Schüttgutzufuhr von einer in Drehrichtung vorderen Innenfläche und einer in Drehrichtung hinteren Innenfläche begrenzt wird, wobei die vordere Innenfläche eine senkrechte Kante aufweist, welche im Wesentlichen senkrecht auf die Mantelfläche der Dosierwalze stößt

Ausführungsbeispiele werden bei der nachfolgenden Beschreibung anhand der Figuren beschrieben. Dabei zeigen:
- Fig. 1: die Dosiervorrichtung in einer Draufsicht entlang der Drehachse der Dosierwalze;
- Fig. 2: eine Seitenansicht der Dosierwalze in einer ersten Ausführungsform;
- Fig. 3: eine Seitenansicht der Dosierwalze in einer zweiten Ausführungsform;
- Fig. 4: die Dosiervorrichtung aus Fig. 1 mit zu dosierenden Schüttgutpartikeln;
- Fig. 5: eine schematische, perspektivische Darstellung einer Ausführungsform mit einer Profilierung in der Innenfläche des Gehäuses;
- Fig. 6: eine schematische Seitenansicht einer Ausführungsform mit zusätzlich zwei Abstreifvorrichtungen;
- Fig. 7A,B: zwei Schnittansichten von Ausführungsformen mit zwei und vier parallelen Nuten als Profilierung im Gehäuse;
- Fig. 8A, B: zwei Seitenansichten zur Erläuterung der Wirkung der Gehäuseprofilierung.

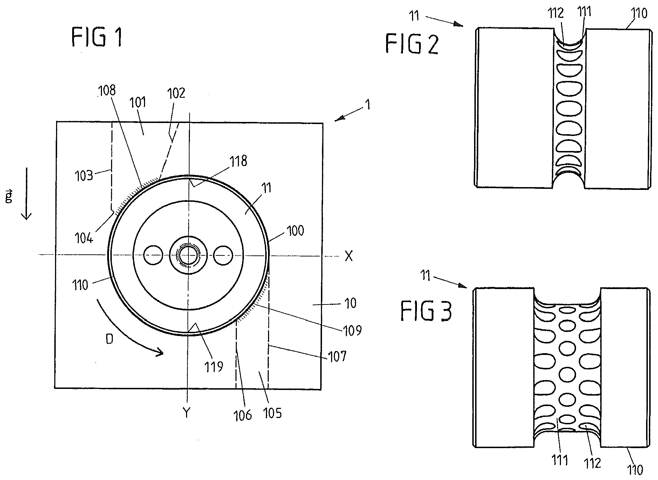

Figur 1 zeigt die Dosiervorrichtung 1 in einer Draufsicht entlang der Drehachse der Drehrichtung D der Dosierwalze 11. Die Dosierwalze 11 ist hierbei in einer dafür vorgesehenen Aussparung im Gehäuse 10 angeordnet und drehbar gelagert. Sie ist dabei derart ausgeführt, dass zwischen der Mantelfläche 110 der Dosierwalze 11 und der Innenfläche 100 des Gehäuses 10 ein gleichmäßiger Spalt besteht. Durch die Lagerung der Dosierwalze 11 mit einem Spalt können Schüttgutpartikel 2 mit unterschiedlicher Größe gleichmäßig und schonend befördert und dosiert werden, ohne dass es zu einem Verklemmen von Schüttgutpartikeln 2 in der Dosiervorrichtung 1 kommt. Die Breite des Spalts ist so gewählt, dass Schüttgutpartikel 2 nicht hinein geraten können. Bei einer im Wesentlichen zylindrisch geformten Dosierwalze 11 ist die Drehachse der Drehrichtung D der Dosierwalze 11 bevorzugt identisch mit der Zylinderachse der Dosierwalze 11.

Wie in Fig. 1 zu erkennen, ist die Dosierwalze 11 zylindrisch geformt und in eine zylindrische Ausnehmung (Bohrung) des Gehäuses 10 eingesetzt. Da keine Abstreifer in den Schüttgutkanal 111 eingreifen, ist die Dosierwalze 11 leicht zu entnehmen und wieder einzusetzen.

Das zu dosierende Schüttgut wird der Dosierwalze 11 über die Schüttgutzufuhr 101 zugeführt. Die Schüttgutzufuhr 101 kann z.B. an einen Schüttgutvorrat oder eine andere Zufuhrvorrichtung angeschlossen sein. Die Schüttgutzufuhr 101 ist in Fig. 1 als eine trichterförmige Ausnehmung im Gehäuse 10 dargestellt. Diese Trichterform ist jedoch lediglich eine von verschiedenen möglichen Formgebungen, wie beispielsweise eine gebogene oder schräge Form oder eine gerade Form, d.h. mit parallelen Innenflächen. Die Schüttgutzufuhr 101 wird in Drehrichtung D gesehen von einer hinteren und einer vorderen Innenfläche 102, 103 begrenzt. Die hintere Innenfläche 102 verhindert, dass Schüttgutpartikel 2 entgegen der Drehrichtung durch die Dosiervorrichtung fallen bzw. geschoben werden. Zwischen dien Innenflächen 102, 103 erstreckt sich eine Öffnung 108, in Fig. 1 durch eine Schraffur hervorgehoben, durch welche hindurch die Schüttgutpartikel 2 auf die Dosierwalze 11 auftreffen. Die Beförderung der Schüttgutpartikel 2 durch die Schüttgutzufuhr 101 erfolgt dabei mit Hilfe der Schwerkraft (g).

Die Ausführungsform der Dosiervorrichtung 1 weist die in Drehrichtung D gesehen vordere Innenfläche 103 der Schüttgutzufuhr 101 eine Kante 104 auf, welche im Wesentlichen senkrecht auf die Mantelfläche 110 der Dosierwalze 11 stößt. Durch eine derart geformte Kante 104 kann die Dosierung der Schüttgutpartikel 2 gleichmäßig erfolgen, ein Verklemmen von Schüttgutpartikeln 2 zwischen der Dosierwalze 11 und der Innenfläche 100 des Gehäuses 10 wird vermindert.

Wie in den nachfolgenden Figuren 2 und 3 näher erläutert werden wird, ist in der Mantelfläche 110 der Dosierwalze 11 ein Schüttgutkanal 111 zur Aufnahme von Schüttgutpartikeln 2 eingeformt, in welchen die Schüttgutpartikel 2 an der Schüttgutzufuhr 101 zugeführt werden. Durch die Drehbewegung der Dosierwalze 11 in Drehrichtung D werden die Schüttgutpartikel 2 in Drehrichtung gefördert. Von der Schüttgutzufuhr 101 bis zum unteren Totpunkt 119 kommt es durch Einwirkung der Schwerkraft zu einer Auflockerung der Schüttgutpartikel 2. Von dem unteren Totpunkt 119 bis zur Schüttgutabfuhr 105 werden die Schüttgutpartikel 2 durch die Drehung der Dosierwalze 11 gegen die Schwerkraft gefördert.

Die Schüttgutabfuhr 105 ist in Fig. 1 ähnlich der Schüttgutzufuhr 101 als eine Ausnehmung im Gehäuse 10 der Dosiervorrichtung 1 dargestellt. Das Gehäuse 10 kann aus einem einzelnen Teil bestehen oder aus einer Vielzahl von Teilen zusammengesetzt sein. Die in Drehrichtung D gesehen hintere und vordere Innenfläche 106, 107 der Schüttgutabfuhr 105 sind im Wesentlichen parallel zueinander sowie im Wesentlichen parallel zur senkrechten Achse Y geformt. Es ist jedoch auch denkbar, dass die Innenflächen 106, 107 anders geformt sind, beispielsweise trichterförmig, bzw. nach unten hin eine schmaler oder breiter werdende Schüttgutabfuhr 105 bilden oder schräg geformt sind. Die Abfuhr der Schüttgutpartikel 2 erfolgt durch eine sich zwischen den Innenflächen 106, 107 der Schüttgutabfuhr 105 erstreckende Öffnung 109, in Fig. 1 durch eine Schraffur hervorgehoben. Durch diese Öffnung 109 können Schüttgutpartikel 2 aus der Schüttgutabfuhr 105 sowie aus der Dosiervorrichtung 1 austreten, beispielsweise aufgrund der Schwerkraft.

Bei einer Ausführungsform der Dosiervorrichtung 1 erfolgt die Zufuhr der Schüttgutpartikel 2 (durch die Öffnung 108 der Schüttgutzufuhr 101) in Drehrichtung D der Dosierwalze 11 nach dem oberen Totpunkt 118, während die Abfuhr der Schüttgutpartikel 2 (durch die Öffnung 109 der Schüttgutabfuhr 105) in Drehrichtung D der Dosierwalze 11 nach dem unteren Totpunkt 119 erfolgt. Die in Fig. 1 dargestellten Öffnungen 108, 109 befinden sich an dementsprechenden Positionen. Allerdings ist die genaue Anordnung der Öffnungen 108, 109 beliebig, solange sie die zuvor genannten Anforderungen erfüllt. So können die Öffnungen 108, 109 auch breiter oder schmaler als in Fig. 1 dargestellt ausgeführt werden oder in geringerer oder größerer Entfernung (in Drehrichtung D) zu den entsprechenden Totpunkten 118, 119 vorgesehen sein.

Nicht in Fig. 1 dargestellt sind Begrenzungen bzw. Innenflächen der Schüttgutzufuhr 101 und der Schüttgutabfuhr 105 welche entlang der Drehachse der Drehrichtung D, d.h. entlang der Blickrichtung der Draufsicht auf die Dosiervorrichtung 1 in Fig. 1 beabstandet sind. Diese können ebenfalls parallel zueinander oder in einem beliebigen Winkel zueinander geformt sein oder gebogen sein.

Die Innenflächen der Schüttgutzufuhr 101 und der Schüttgutabfuhr 105 - hierbei sind die in Fig. 1 dargestellten Flächen 102, 103, 106, 107, sowie die in Fig. 1 nicht dargestellten, entlang der Drehachse der Drehrichtung D beabstandeten Flächen gemeint - können beispielsweise als ebene Flächen ausgebildet sein und somit einen Schacht bilden, der einen rechteckigen Querschnitt (in der waagrechten Ebene) aufweist. Gleichermaßen können die genannten Flächen jedoch auch gebogen sein, so dass sich beispielsweise ein kreisförmiger oder ovaler Querschnitt der Schüttgutzufuhr 101 und der Schüttgutabfuhr 105 in der waagrechten Ebene ergibt, solange die Zufuhr der Schüttgutpartikel 2 in Drehrichtung D der Dosierwalze 11 nach dem oberen Totpunkt 118 und die Abfuhr der Schüttgutpartikel 2 in Drehrichtung D der Dosierwalze 11 nach dem unteren Totpunkt 119 erfolgt. Die in Fig. 1 nicht dargestellten, entlang der Drehachse der Drehrichtung D beabstandeten Innenflächen der Schüttgutzufuhr 101 und der Schüttgutabfuhr 105 können insbesondere derart ausgeführt sein, dass die Schüttgutpartikel 2 nur an den Teil der Mantelfläche 110 der Dosierwalze 11 geleitet werden, an dem der Schüttgutkanal 111 eingeformt ist.

Es ist anzumerken, dass eine zur in Fig. 1 gezeigten Dosiervorrichtung 1 spiegelbildliche Dosiervorrichtung mit umgekehrter Drehrichtung die identische Funktion aufweist. Im Fall eines symmetrischen Aufbaus der Dosiervorrichtung 1 entspricht dies dem Blick auf die Dosierwalze 11 in Fig. 1 in einer Richtung entgegengesetzt der Blickrichtung aus Fig. 1.

Der Schüttgutkanal 111 der Dosierwalze 11 ist in zwei beispielhaften Ausführungsformen in den Figuren 2 und 3 dargestellt.

Sowohl das Gehäuse 10 als auch die Dosierwalze 11 können, zumindest teilweise, aus Edelstahl, insbesondere rostfreiem Edelstahl, gefertigt sein. Insbesondere kann die Mantelfläche 110 der Dosierwalze 11 und/oder die Innenfläche 100 des Gehäuses 10 aus einem solchen Material beschaffen sein. Allerdings sind für alle Teile der Dosiervorrichtung 1 auch andere Materialien, wie beispielsweise einfacher Stahl oder Kunststoff, denkbar.

Figur 2 zeigt die Dosierwalze 11 in einer ersten, zylindrischen Ausführungsform in einer seitlichen Ansicht, d.h. in einer Blickrichtung senkrecht zur Zylinderachse der Dosierwalze 11. Die dargestellte Dosierwalze 11 weist einen an der Mantelfläche 110 umlaufenden Schüttgutkanal 111 auf, in den in regelmäßigen Abständen Schüttguttaschen 112 eingeformt sind. Die Schüttguttaschen 112 dienen der Aufnahme und dem Transport von Schüttgutpartikeln 2. Die Größe der Schüttguttaschen 112 kann an die maximale oder die durchschnittliche Größe der zu transportierenden Schüttgutpartikel 2 angepasst werden. Es ist ferner möglich, dass die Schüttguttaschen 112 in verschiedenen Größen vorgesehen sind.

Die in Fig. 2 dargestellten Schüttguttaschen 112 sind muldenförmig ausgestaltet, allerdings sind beliebige Abwandlungen von dieser Form denkbar, solange die Schüttguttaschen 112 zur Aufnahme und/oder zum Transport der Schüttgutpartikel 2 geeignet sind. Auch ist es nicht zwingend notwendig, dass die Schüttguttaschen 112 in regelmäßigen Abständen im Schüttgutkanal 111 vorgesehen sind. Auch ist es möglich, dass die Abstände zwischen Schüttguttaschen 112 variieren. Ferner ist es denkbar, dass nicht am gesamten Schüttgutkanal 111, d.h. über den gesamten Umfang der Mantelfläche 110 der Dosierwalze 11, Schüttguttaschen 112 vorgesehen sind. Je nach Beschaffenheit des Schüttguts und sofern die Reibung zwischen dem Schüttgut und dem Schüttgutkanal 111 ausreichend groß ist, dass die Schüttgutpartikel 2 in Drehrichtung D der Dosierwalze 11 mitgenommen werden, kann auch ganz auf Schüttguttaschen 112 verzichtet werden, oder lediglich eine Schüttguttasche 112 im Schüttgutkanal 111 vorgesehen sein. Anstelle von Schüttguttaschen 112 können gegebenenfalls auch Noppen am Schüttgutkanal 111 vorgesehen sein. Entsprechend können auch Querrippen am Schüttgutkanal 111 vorgesehen sein.

Der Schüttgutkanal 111 und/oder die Schüttguttaschen 112 können in die Dosierwalze 11 eingearbeitet sein, z.B. durch Fräsen, oder zusammen mit der Dosierwalze 11 geformt werden, z.B. durch einen Spritzguss.

Während in der in Fig. 2 gezeigten ersten Ausführungsform der Dosierwalze 11 ein Schüttgutkanal 111 mit lediglich einer umlaufenden Reihe von Schüttguttaschen 112 vorgesehen ist, ist in Fig. 3 eine zweite Ausführungsform mit drei Reihen von Schüttguttaschen 112 gezeigt. In dieser zweiten Ausführungsform ist der Schüttgutkanal 111 breiter ausgeführt als in der ersten Ausführungsform. Hierbei sind die Schüttguttaschen 112 der beiden äußeren Reihen näherungsweise oval und diejenigen der inneren Reihe näherungsweise kreisförmig geformte Mulden. Bezüglich der Anordnung, der Formen und der Größen der Schüttguttaschen 112 und der Abstände zwischen den Schüttguttaschen 112 wird auf die Beschreibung der Fig. 1 verwiesen.

Je nach Beschaffenheit des zu transportierenden Schüttguts kann der Schüttgutkanal 111 schmaler als der Schüttgutkanal 111 in Fig. 2 oder breiter als der Schüttgutkanal 111 in Fig. 3 sein, oder eine Breite aufweisen, die zwischen den Breiten der beiden Schüttgutkanäle 111 der Figuren 2 und 3 liegt.

Ein schmaler Schüttgutkanal 111, wie beispielsweise in Fig. 2 dargestellt, ermöglicht, im Vergleich zu einem breiteren Schüttgutkanal 111, eine gleichmäßigere Dosierung der Schüttgutpartikel 2 bei einer niedrigen Drehgeschwindigkeit der Dosierwalze 11. Ein breiter Schüttgutkanal 111, wie beispielsweise in Fig. 3 dargestellt, ermöglicht im Vergleich zu einem schmalen Schüttgutkanal 111 bei gleicher Drehzahl eine höhere Förderrate von Schüttgutpartikeln 2.

Die in den Figuren 2 und 3 dargestellten Ausführungsformen der Dosierwalze 11 haben im Wesentlichen eine zylindrische Form. Doch auch andere Formen als eine zylindrische sind denkbar, wie beispielsweise eine konische Form oder eine Form, die entlang der Drehachse der Drehrichtung D breitere und dünnere Abschnitte aufweist.

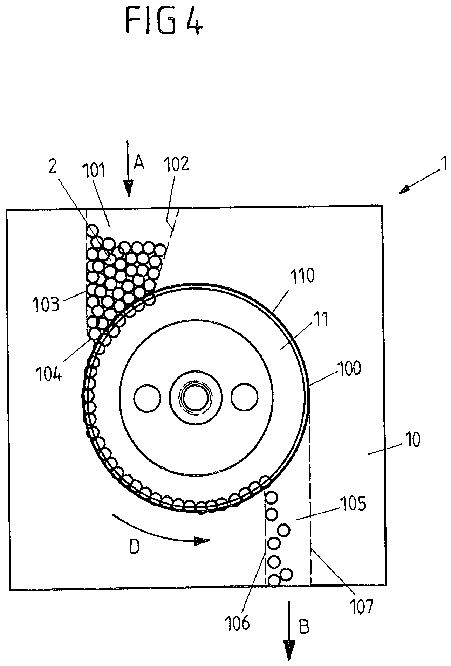

Figur 4 zeigt die Dosiervorrichtung 1 aus Fig. 1 mit zu transportierenden Schüttgutpartikeln 2. In der Schüttgutzufuhr 101 befindet sich ein Vorrat von Schüttgutpartikeln 2, welche der Dosiervorrichtung 1 über einen Schüttguteinlauf A zugeführt werden. Ein Schüttguteinlauf A kann manuell oder durch jede geeignete Vorrichtung erfolgen. Die Schüttgutpartikel 2 gelangen durch die Öffnung 108 in den Schüttgutkanal 111 und in die Schüttguttaschen 112. Durch die Drehung der Dosierwalze 11 in Drehrichtung D werden die Schüttgutpartikel 2 mitgenommen und in Richtung der Schüttgutabfuhr 105 befördert. Um einem Verklemmen von Schüttgutpartikeln 2 in der Dosiervorrichtung 1 vorzubeugen ist die in Drehrichtung D gesehen vordere Innenfläche 103 mit einer Kante 104 versehen, welche im Wesentlichen senkrecht auf die Dosierwalze 11 stößt.

Auf dem Weg von der Schüttgutzufuhr 101 bis zum unteren Totpunkt 119 kommt es durch die Schwerkraft zu einem Durchrütteln und/oder Auflockern der Schüttgutpartikel 2. Hierbei werden die Schüttgutpartikel 2 neu sortiert. Durch ein Auflockern können Lücken zwischen Schüttgutpartikeln 2 entstehen.

Auf dem Weg von dem unteren Totpunkt 119 bis zur Schüttgutabfuhr 105 werden die Schüttgutpartikel 2 durch die Drehung der Dosierwalze 11 in der Drehrichtung D gegen die Schwerkraft gefördert. Dabei können Schüttgutpartikel 2 zusammen geschoben werden, d.h. die Lücken können verkleinert werden. Hierbei wird eine besonders gleichmäßige Verteilung von Schüttgutpartikeln 2 erreicht.

Sobald die Schüttgutpartikel 2 die Schüttgutabfuhr 105 erreichen, fallen sie aufgrund der Schwerkraft durch die Öffnung 109 aus der Schüttgutabfuhr 105 der Dosiervorrichtung 1 und werden einem Schüttgutauslauf B zugeführt, über den die Schüttgutpartikel 2 weiter befördert und/oder verarbeitet werden können. Durch ein zuvor erfolgtes Auflockern und Zusammenschieben der Schüttgutpartikel 2 wird durch die Dosiervorrichtung 1 eine besonders gleichmäßige Förderrate von Schüttgutpartikeln 2 erzielt.

Für die übrige Beschreibung der Fig. 4 wird auf die obenstehende Beschreibung der Fig. 1 verwiesen.

Es sei angemerkt, dass anstelle der Schwerkraft und je nach Beschaffenheit der Schüttgutpartikel 2 beispielsweise auch ein Überdruck an die Schüttgutzufuhr 101 oder ein Unterdruck an die Schüttgutabfuhr 105 angelegt werden kann um die Beförderung der Schüttgutpartikel 2 zu erreichen. Ferner kann ein Über- oder Unterdruck an der Schüttgutzufuhr 101 und/oder an der Schüttgutabfuhr 105 dazu verwendet werden, um elektrostatisch an der Dosiervorrichtung 1 haftende Schüttgutpartikel 2 zu entfernen. Hierbei kann insbesondere gepulste Druckluft verwendet werden.

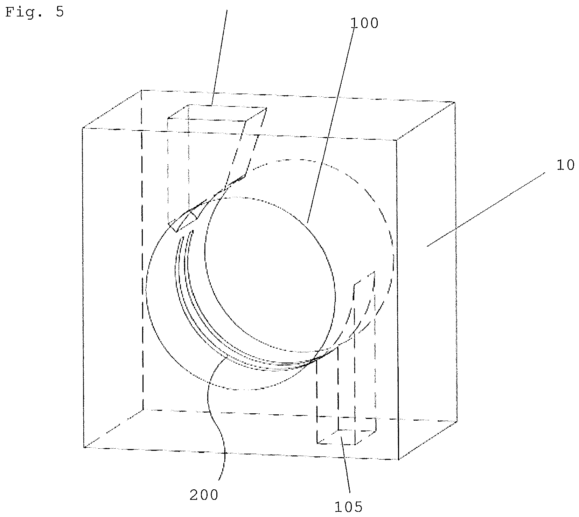

In Fig. 5 ist eine Fortbildung der zuvor dargestellten Ausführungsformen dargestellt, so dass auf die obige Beschreibung grundsätzlich Bezug genommen werden kann.

Hier sind in der Innenfläche 100 des Gehäuses 10 zwei Nuten 200 als Vertiefungen, d.h. als Profilierung angeordnet. Die Nuten 200 erstrecken sich dabei in der Innenfläche 100 in Umfangsrichtung (und in Drehrichtung der Dosierwalze 11) über einen erheblichen Winkelbereich, nämlich im Wesentlichen von der Schüttgutzufuhr 101 bis zur Schüttgutabfuhr 105.

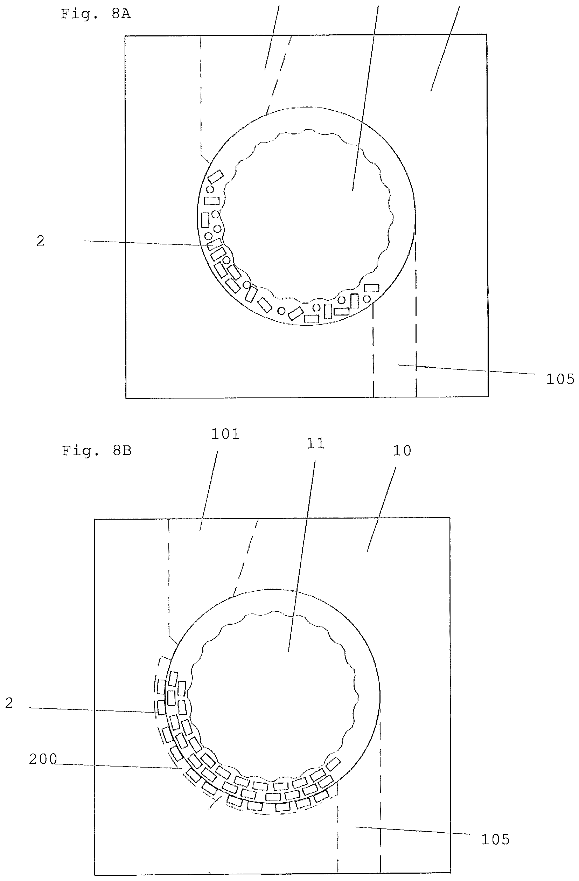

In Fig. 8A und 8B ist der Effekt dieser Profilierung 200 schematisch dargestellt. In Fig. 8A ist eine Ausführungsform ohne Profilierung 200 dargestellt. Dabei sammeln sich Schüttgutpartikel 2 während der Förderung relativ ungeordnet im Zwischenraum zwischen Dosierwalze 11 und der Innenfläche 100 des Gehäuses 10. In Fig. 8B hingegen wird deutlich, dass die länglichen Schuttgutpartikel 2 sich in den rillenförmigen Nuten 200 anordnen und ausrichten, was zu einer geordneteren Förderung führt.

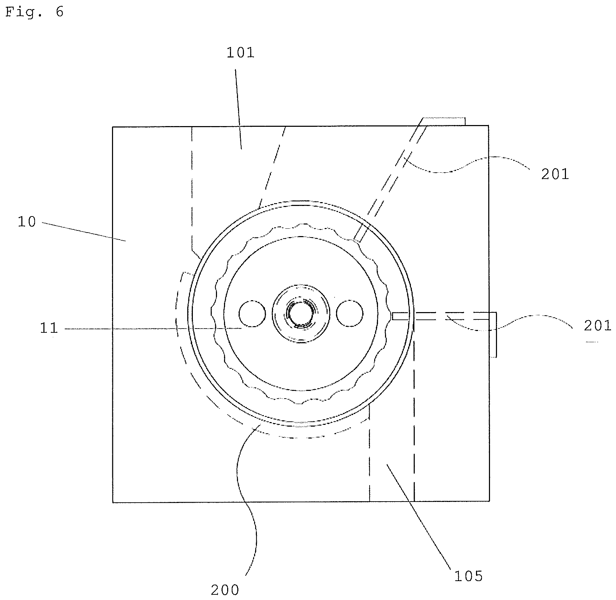

In Fig. 6 sind zusätzlich zu der Profilierung 200 in Form von Nuten noch zwei Abstreifvorrichtungen 201 vorgesehen, die Material, wie z.B. anhaftende Schüttgutpartikel 2 von der Dosierwalze 11 entfernen.

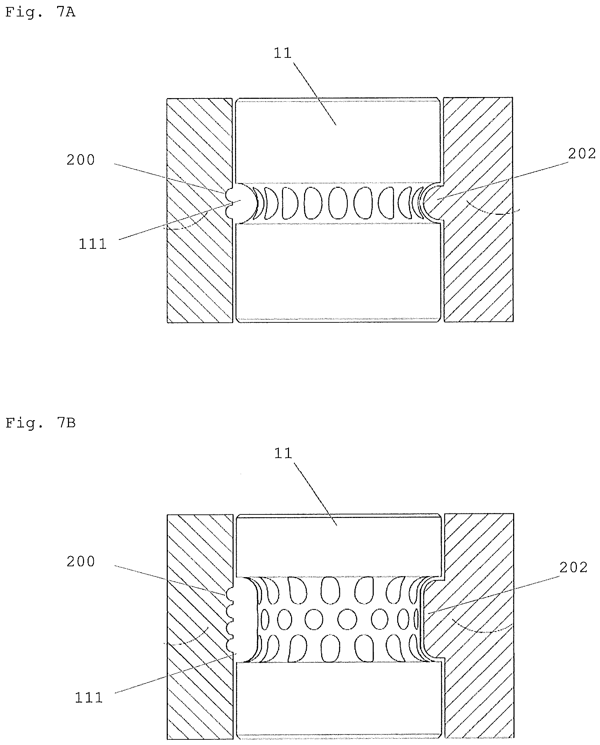

In den Fig. 7A, B sind unterschiedliche Varianten dieser Ausführungsformen dargestellt. In Fig. 7A sind im Bereich der geförderten Schüttgutpartikel 2 zwei parallele Nuten 200 als Profilierung angeordnet. Des Weiteren verfügt diese Ausführungsform über eine Abstreifvorrichtung 201 die konturangepasst in den Schüttgutkanal 111 der Dosierwalze 11 eingefügt ist. Fig. 7B zeigt eine Dosierwalze 1 mit einem breiteren Schüttgutkanal 111. Hier sind vier parallele Nuten 200 in der Innenfläche 100 des Gehäuses 10 angeordnet. Auch hier ragt eine konturangepasste Abstreifvorrichtung 201 in den Schüttgutkanal 11.

In anderen Ausführungsformen ist die Profilierung nicht in Drehrichtung oder Umfangsrichtung angeordnet. Werden z.B. die parallelen Nuten 200 unter einem Winkel an der Innenfläche 100 des Gehäuses 10 angeordnet, so ergibt sich eine Spiralform.

### Bezugszeichenliste:

- 1: Dosiervorrichtung

- 10: Gehäuse
- 100: Innenfläche des Gehäuses
- 101: Schüttgutzufuhr
- 102: hintere Innenfläche der Schüttgutzufuhr
- 103: vordere Innenfläche der Schüttgutzufuhr
- 104: senkrechte Kante
- 105: Schüttgutabfuhr
- 106: hintere Innenfläche der Schüttgutabfuhr
- 107: vordere Innenfläche der Schüttgutabfuhr
- 108: Öffnung der Schüttgutzufuhr
- 109: Öffnung der Schüttgutabfuhr

- 11: Dosierwalze
- 110: Mantelfläche der Dosierwalze
- 111: Schüttgutkanal
- 112: Schüttguttaschen
- 118: oberer Totpunkt
- 119: unterer Totpunkt

- 2: Schüttgutpartikel

- 200: Profilierung, Vertiefung in Innenfläche des Gehäuses
- 201: Abstreifvorrichtung

- X: waagrechte Achse
- Y: senkrechte Achse

- A: Schüttguteinlauf
- B: Schüttgutauslauf
- D: Drehrichtung der Dosierwalze

## Patentansprüche

1. Dosiervorrichtung für Schüttgutpartikel, mit einer die Schüttgutpartikel (2) dosierenden Dosierwalze (11), die einen oberen Totpunkt (118) und einen unteren Totpunkt (119) aufweist, welche durch den oberen bzw. den unteren Schnittpunkt einer senkrechten Achse (Y) durch die Drehachse einer Drehrichtung (D) der Dosierwalze (11) mit einer Mantelfläche (110) der Dosierwalze (11) definiert werden, wobei die Abfuhr der Schüttgutpartikel (2) durch eine Öffnung (109) einer Schüttgutabfuhr (105) in Drehrichtung (D) der Dosierwalze (11) nach dem unteren Totpunkt (119) erfolgt, **dadurch gekennzeichnet, dass** die Zufuhr der Schüttgutpartikel (2) durch eine Öffnung (108) einer Schüttgutzufuhr (101) in Drehrichtung (D) der Dosierwalze (11) nach dem oberen Totpunkt (118) erfolgt.

2. Dosiervorrichtung nach Anspruch 1, **dadurch gekennzeichnet, dass** die Schüttgutzufuhr (101) von einer in Drehrichtung (D) vorderen Innenfläche (103) und einer in Drehrichtung (D) hinteren Innenfläche (102) begrenzt wird, wobei die vordere Innenfläche (103) eine senkrechte Kante (104) aufweist, welche im Wesentlichen senkrecht auf die Mantelfläche (110) der Dosierwalze (11) stößt.

3. Dosiervorrichtung nach Anspruch 1 oder 2, **dadurch gekennzeichnet, dass** die vordere Innenfläche (103) der Schüttgutzufuhr (101) in einem Winkel, der flacher als senkrecht ist, auf die Dosierwalze (11) stößt.

4. Dosiervorrichtung nach mindestens einem der vorhergehenden Ansprüche, **dadurch gekennzeichnet, dass** ein Gehäuse (10), in dem die Dosierwalze angeordnet ist, und/oder die Dosierwalze (11) zumindest teilweise aus Edelstahl hergestellt sind.

5. Dosiervorrichtung nach mindestens einem der vorhergehenden Ansprüche, **dadurch gekennzeichnet, dass** zwischen der Mantelfläche (110) der Dosierwalze (11) und einer Innenfläche (100) des Gehäuses (10) ein Spalt besteht.

6. Dosiervorrichtung nach mindestens einem der vorhergehenden Ansprüche, **dadurch gekennzeichnet, dass** der Spalt zwischen der Mantelfläche (110) der Dosierwalze (11) und der Innenfläche (100) des Gehäuses (10) entlang dem Umfang der Dosierwalze (11) eine gleichmäßige Breite aufweist.

7. Dosiervorrichtung nach mindestens einem der vorhergehenden Ansprüche, **dadurch gekennzeichnet, dass** die Dosierwalze (11) zur Beförderung der Schüttgutpartikel (2) einen Schüttgutkanal (111) umfasst.

8. Dosiervorrichtung nach Anspruch 7, **dadurch gekennzeichnet, dass** im Schüttgutkanal (111) Schüttguttaschen (112) zur Aufnahme und Beförderung der Schüttgutpartikel (2) vorgesehen sind.

9. Dosiervorrichtung nach Anspruch 7 oder 8, **dadurch gekennzeichnet, dass** an der Schüttgutzufuhr (101) und/oder an der Schüttgutabfuhr (105) mindestens ein Mittel vorgesehen ist, welches verhindert, dass Schüttgutpartikel (2) in den Bereich des Schüttgutkanals (111) zwischen der hinteren Innenfläche (102) der Schüttgutzufuhr (101) und einer vorderen Innenfläche (107) der Schüttgutabfuhr (105) gelangen.

10. Dosiervorrichtung nach mindestens einem der vorhergehenden Ansprüche, **dadurch gekennzeichnet, dass** die Schüttgutzufuhr (101) im Wesentlichen trichterförmig ausgeführt ist.

11. Dosiervorrichtung nach mindestens einem der vorhergehenden Ansprüche, **dadurch gekennzeichnet, dass** in der Innenfläche (100) des Gehäuses (10) mindestens eine Profilierung, insbesondere eine Vertiefung (200), insbesondere in Umfangrichtung oder in Spiralform angeordnet ist.

12. Dosiervorrichtung nach mindestens einem der vorhergehenden Ansprüche, **gekennzeichnet durch** mindestens eine Abstreifvorrichtung (201), insbesondere eine elektrostatische Abstreifvorrichtung (201) zur Entfernung von Schüttgutpartikeln (2) oder Material von der Dosierwalze (11).

13. Dosiervorrichtung nach Anspruch 12, **dadurch gekennzeichnet, dass** die mindestens eine Abstreifvorrichtung (201) konturangepasst in den Schüttgutkanal (111) der Dosierwalze (11) ragt.

14. Verfahren zur Dosierung von Schüttgutpartikeln unter Verwendung einer Dosiervorrichtung für Schüttgutpartikel, mit einer die Schüttgutpartikel (2) dosierenden Dosierwalze (11), die einen oberen Totpunkt (118) und einen unteren Totpunkt (119) aufweist, welche durch den oberen bzw. den unteren Schnittpunkt einer senkrechten Achse (Y) durch die Drehachse einer Drehrichtung (D) der Dosierwalze (11) mit einer Mantelfläche (110) der Dosierwalze (11) definiert werden, wobei die Schüttgutpartikel (2) durch eine Öffnung (109) einer Schüttgutabfuhr (105) in Drehrichtung (D) der Dosierwalze (11) nach dem unteren Totpunkt (119) abgeführt werden, **dadurch gekennzeichnet, dass** die Schüttgutpartikel (2) durch eine Öffnung (108) einer Schüttgutzufuhr (101) in Drehrichtung (D) der Dosierwalze (11) nach dem oberen Totpunkt (118) zugeführt werden.

15. Verfahren nach Anspruch 14, **dadurch gekennzeichnet, dass** die Schüttgutzufuhr (101) von einer in Drehrichtung (D) vorderen Innenfläche (103) und einer in Drehrichtung (D) hinteren Innenfläche (102) begrenzt wird, wobei die vordere Innenfläche (103) eine senkrechte Kante (104) aufweist, welche im Wesentlichen senkrecht auf die Mantelfläche (110) der Dosierwalze (11) stößt.

## Claims

1. A dosing device for bulk material particles, comprising a dosing roller (11) dosing the bulk material particles (2), which has a top dead center (118) and a bottom dead center (119) which are defined by the upper and lower points of intersection of a vertical axis (Y) through the axis of rotation of a direction of rotation (D) of the dosing roller (11) with a shell surface (110) of the dosing roller (11),
wherein the discharge of the bulk material particles (2) is effected through an opening (109) of a bulk material discharge (105) in direction of rotation (D) of the dosing roller (11) after the bottom dead center (119),
**characterized in that** the supply of the bulk material particles (2) is effected through an opening (108) of a bulk material supply (101) in direction of rotation (D) of the dosing roller (11) after the top dead center (118).

2. The dosing device according to claim 1, **characterized in that** the bulk material supply (101) is delimited by a front inner surface (103) in direction of rotation (D) and by a rear inner surface (102) in direction of rotation (D), wherein the front inner surface (103) has a vertical edge (104) which substantially vertically abuts against the shell surface (110) of the dosing roller (11).

3. The dosing device according to claim 1 or 2, **characterized in that** the front inner surface (103) of the bulk material supply (101) abuts against the dosing roller (11) at an angle which is flatter than vertical.

4. The dosing device according to at least one of the preceding claims, **characterized in that** a housing (10) in which the dosing roller is arranged and/or the dosing roller (11) are at least partly made of stainless steel.

5. The dosing device according to at least one of the preceding claims, **characterized in that** there is a gap between the shell surface (110) of the dosing roller (11) and an inner surface (100) of the housing (10).

6. The dosing device according to at least one of the preceding claims, **characterized in that** the gap between the shell surface (110) of the dosing roller (11) and the inner surface (100) of the housing (10) has a uniform width along the circumference of the dosing roller (11).

7. The dosing device according to at least one of the preceding claims, **characterized in that** the dosing roller (11) comprises a bulk material channel (111) for conveying the bulk material particles (2).

8. The dosing device according to claim 7, **characterized in that** in the bulk material channel (111) bulk material pockets (112) are provided for receiving and conveying the bulk material particles (2).

9. The dosing device according to claim 7 or 8, **characterized in that** on the bulk material supply (101) and/or on the bulk material discharge (105) there is provided at least one means which prevents that bulk material particles (2) get into the region of the bulk material channel (111) between the rear inner surface (102) of the bulk material supply (101) and a front inner surface (107) of the bulk material discharge (105).

10. The dosing device according to at least one of the preceding claims, **characterized in that** the bulk material supply (101) is designed substantially funnel-shaped.

11. The dosing device according to at least one of the preceding claims, **characterized in that** in the inner surface (100) of the housing (10) at least one profiling, in particular a depression (200), in particular in circumferential direction or in spiral form is arranged.

12. The dosing device according to at least one of the preceding claims, **characterized by** at least one stripping device (201), in particular an electrostatic stripping device (201) for removing bulk material particles (2) or material from the dosing roller (11).

13. The dosing device according to claim 12, **characterized in that** the at least one stripping device (201) adapted in its contour protrudes into the bulk material channel (111) of the dosing roller (11).

14. A method for dosing bulk material particles by using a dosing device for bulk material particles, comprising a dosing roller (11) dosing the bulk material particles (2), which has a top dead center (118) and a bottom dead center (119) which are defined by the upper and lower points of intersection of a vertical axis (Y) through the axis of rotation of a direction of rotation (D) of the dosing roller (11) with a shell surface (110) of the dosing roller (11),
wherein the bulk material particles (2) are discharged through an opening (109) of a bulk material discharge (105) in direction of rotation (D) of the dosing roller (11) after a bottom dead center (119),
**characterized in that** the bulk material particles (2) are supplied through an opening (108) of a bulk material supply (101) in direction of rotation (D) of the dosing roller (11) after the top dead center (118).

15. The method according to claim 14, **characterized in that** the bulk material supply (101) is delimited by a front inner surface (103) in direction of rotation (D) and a rear inner surface (102) in direction of rotation (D), wherein the front inner surface (103) has a vertical edge (104) which substantially vertically abuts against the shell surface (110) of the dosing roller (11).

## Revendications

1. Dispositif de dosage pour des particules de produit en vrac, avec un cylindre de dosage (11) dosant les particules de produit en vrac (2), lequel présente un point mort supérieur (118) et un point mort inférieur (119), qui sont définis par le point d'intersection supérieur ou par le point d'insertion inférieur d'un axe (Y) perpendiculaire à travers l'axe de rotation d'une direction de rotation (D) du cylindre de dosage (11) avec une surface enveloppante (110) du cylindre de dosage (11),
dans lequel l'évacuation des particules de produit en vrac (2) est effectuée par une ouverture (109) d'une évacuation de produit en vrac (105) dans la direction de rotation (D) du cylindre de dosage (11) après le point mort inférieur (119), **caractérisé en ce que**
l'amenée des particules de produit en vrac (2) est effectuée par une ouverture (108) d'une amenée de produit en vrac (101) dans une direction de rotation (D) du cylindre de dosage (11) après le point mort supérieur (118).

2. Dispositif de dosage selon la revendication 1, **caractérisé en ce que** l'amenée de produit en vrac (101) est délimitée par une surface intérieure avant (103) dans la direction de rotation (D) et par une surface intérieure arrière (102) dans la direction de rotation (D), dans lequel la surface intérieure avant (103) présente une arête (104) perpendiculaire, qui vient buter sensiblement de manière perpendiculaire sur la surface enveloppante (110) du cylindre de dosage (11).

3. Dispositif de dosage selon la revendication 1 ou 2, **caractérisé en ce que** la surface intérieure avant (103) de l'amenée de produit en vrac (101) vient buter sur le cylindre de dosage (11) selon un angle, qui est plus plat que perpendiculaire.

4. Dispositif de dosage selon au moins l'une quelconque des revendications précédentes, **caractérisé en ce qu'**un boîtier (10), dans lequel le cylindre de dosage est disposé, et/ou le cylindre de dosage (11) sont fabriqués au moins en partie à partir d'acier inoxydable.

5. Dispositif de dosage selon au moins l'une quelconque des revendications précédentes, **caractérisé en ce qu'**une fente est présente entre la surface enveloppante (110) du cylindre de dosage (11) et une surface intérieure (100) du boîtier (10).

6. Dispositif de dosage selon au moins l'une quelconque des revendications précédentes, **caractérisé en ce que** la fente entre la surface enveloppante (110) du cylindre de dosage (11) et la surface intérieure (100) du boîtier (10) le long de la périphérie du cylindre de dosage (11) présente une largeur homogène.

7. Dispositif de dosage selon au moins l'une quelconque des revendications précédentes, **caractérisé en ce que** le cylindre de dosage (11) comprend un canal pour produit en vrac (111) aux fins du transport des particules de produit en vrac (2).

8. Dispositif de dosage selon la revendication 7, **caractérisé en ce que** des compartiments de produit en vrac (112) servant à recevoir et à transporter les particules de produit en vrac (2) sont prévus dans le canal pour produit en vrac (111).

9. Dispositif de dosage selon la revendication 7 ou 8, **caractérisé en ce qu'**est prévu, au niveau de l'amenée de produit en vrac (101) et/ou au niveau de l'évacuation de produit en vrac (105), au moins un moyen, qui empêche que des particules de produit en vrac (2) ne parviennent dans la zone du canal pour produit en vrac (111) entre la surface intérieure arrière (102) de l'amenée de produit en vrac (101) et une surface intérieure avant (107) de l'évacuation de produit en vrac (105).

10. Dispositif de dosage selon au moins l'une quelconque des revendications précédentes, **caractérisé en ce que** l'amenée de produit en vrac (101) est réalisée sensiblement de manière à présenter une forme d'entonnoir.

11. Dispositif de dosage selon au moins l'une quelconque des revendications précédentes, **caractérisé en ce qu'**au moins un profilage, en particulier un renfoncement (200), en particulier dans la direction périphérique ou sous la forme d'une spirale, est disposé dans la surface intérieure (100) du boîtier (10).

12. Dispositif de dosage selon au moins l'une quelconque des revendications précédentes, **caractérisé par** au moins un dispositif de raclage (201), en particulier un dispositif de raclage (201) électrostatique servant à éliminer du cylindre de dosage (11) des particules de produit en vrac (2) ou un matériau.

13. Dispositif de dosage selon la revendication 12, **caractérisé en ce que** l'au moins un dispositif (201) de raclage dépasse, avec un contour adapté, dans le canal pour produit en vrac (111) du cylindre de dosage (11).

14. Procédé servant à doser des particules de produit en vrac en utilisant un dispositif de dosage pour des particules de produit en vrac, avec un cylindre de dosage (11) dosant les particules de produit en vrac (2), qui présente un point mort supérieur (118) et un point mort inférieur (119), qui sont définis par le point d'intersection supérieur ou par le point d'insertion inférieur d'un axe (Y) perpendiculaire à travers l'axe de rotation d'une direction de rotation (D) du cylindre de dosage (11) avec une surface enveloppante (110) du cylindre de dosage (11),
dans lequel les particules de produit en vrac (2) sont évacuées par une ouverture (109) d'une évacuation de produit en vrac (105) dans la direction de rotation (D) du cylindre de dosage (11) après le point mort inférieur (119),
**caractérisé en ce que**
les particules de produit en vrac (2) sont amenées par une ouverture (108) d'une amenée de produit en vrac (101) dans la direction de rotation (D) du cylindre de dosage (11) après le point mort supérieur (118).

15. Procédé selon la revendication 14, **caractérisé en ce que** l'amenée de produit en vrac (101) est délimitée par une surface intérieure avant (103) dans la direction de rotation (D) et par une surface intérieure arrière (102) dans la direction de rotation (D), dans lequel la surface intérieure avant (103) présente une arête (104) perpendiculaire, qui vient buter sensiblement de manière perpendiculaire sur la surface enveloppante (110) du cylindre de dosage (11).
